(19) Europäisches Patentamt
European Patent Office
Office européen des brevets

(11) **EP 1 876 567 A1**

(12) **EUROPEAN PATENT APPLICATION**

(43) Date of publication:
**09.01.2008 Bulletin 2008/02**

(51) Int Cl.:
***G06T 7/20*** (2006.01)

(21) Application number: **06425462.6**

(22) Date of filing: **04.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Esaote S.p.A.**
**20100 Milano (IT)**

(72) Inventors:
- **Pedri, Stefano**
  **57023 Cecina (LI) (IT)**
- **Lo Nero, Francesco**
  **50142 Firenze (IT)**

(74) Representative: **Karaghiosoff, Giorgio Alessandro**
**Studio Karaghiosoff e Frizzi s.r.l.**
**Via Pecorile 25**
**17015 Celle Ligure (SV) (IT)**

(54) **A method of determining the time dependent behavior of non rigid moving objects, particularly of biological tissues, from echographic ultrasound imaging data**

(57) The invention relates to a method of determining the time dependent behavior of non rigid moving objects, particularly of biological tissues from echographic ultrasound imaging data comprising the steps of: tracking position and velocity of objects' borders in two or three dimensional digital images, particularly in echographic images by: Acquiring a sequence of at least two consecutive ultrasound image frames of a moving tissue or a moving object which ultrasound image frames are timely separated by a certain time interval; Automatically or manually defining a certain number of reference points of a border of a moving tissue or object at least on one image frame of the sequence of image frames acquired; Automatically tracking the border of the moving tissue or object in the at least one further following frame by determining the new position of the reference points of the border in at least one following image frame of the sequence of image frames by estimating the position of the said reference points in the said at least following image frame of the sequence of image frames on the basis of the ultrasound image data of the acquired sequence of image frames and determining the border line instant velocity on each image frame of said sequence of image frames.

According to the invention in order to evaluate strain and strain rate of the moving object the component for the velocity vector tangential to the said border line and the component normal to the said tangential direction are determined and the strain is being evaluated as a function of the said tangential component of the velocity vectors and of the component of the velocity vector normal to the said tangential component.

Fig. 1

Slice of the basal ventricular short-axis view

Slice of the mid-ventricular short-axis view

Slice of the apex short-axis view

Right ventricle

apex

Left ventricle

EP 1 876 567 A1

**Description**

BACKGROUND OF THE INVENTION

The invention relates to a method of determining the time dependent behavior of non rigid moving objects, particularly of biological tissues from echographic ultrasound imaging data comprising the steps of tracking position and velocity of objects' borders in two or three dimensional digital images, particularly in echographic images comprising the following steps:

Acquiring a sequence of at least two consecutive ultrasound image frames of a moving tissue or a moving object which ultrasound image frames are timely separated by a certain time interval.

Automatically or manually defining a certain number of reference points of a border of a moving tissue or object at least on one image frame of the sequence of image frames acquired;

Automatically tracking the border of the moving tissue or object in the at least one further following frame by determining the new position of the reference points of the border in at least one following image frame of the sequence of image frames by estimating the position of the said reference points in the said at least following image frame of the sequence of image frames on the basis of the ultrasound image data of the acquired sequence of image frames;

Determining the border line instant velocity on each image frame of said sequence of image frames.

The automatic detection of borders and their rate of displacement is a fundamental topic in image analysis. The ability to automatically detect borders and their velocity, allows an easy recognition of objects, the improved understanding of its function. In medical imaging the automatic recognition of an organ would eventually facilitate the extraction of objective measurements and automate some diagnostic processes.

A typical example is given by echocardiography in the imaging of the left ventricle. The possibility of an automatic detection of the endocardial border would give objective measurement of the ventricular volume, in particular its extreme values (at proto-systole and tele-diastole) are commonly used for clinical diagnosis and the relative diagnostic indexed are calculated. In addition, the possibility to visualize the border velocities allows an easier assessment of the regional dynamical properties.

Border velocities allows also to determine strain rate of moving tissues. As an example strain rate and strain echocardiography is an emerging non invasive technique for assessing myocardial function. Regional myocardial strain rate and strain can help in detecting inducible ischemia at earlier stages than visual estimation of wall motion or wall thickening parameters. Furthermore changes in systolic and diastolic strain rate and strain has been shown to have the potential to discriminate between different myocardial viability states.

In general, and certainly in echographic imaging, the development of reliable methods for the automatic border detection is an extremely difficult task that has not received a generally reliable solution. In fact, in clinical practice, borders are drawn manually by the operator over the physiologically relevant frames of a sequence of images.

A strain rate analysis method in ultrasonic diagnostic imaging is disclosed in WO 02/45587. According to this document strain rate analysis is performed for ultrasonic images in which the spatial gradient of velocity is calculated in the direction of tissue motion. Strain rate is calculated for cardiac ultrasound images in the direction of motion which, for myocardial images, may be either in the plane of the myocardium or across the myocardium. Strain rate information is calculated for a sequence of images of a heart cycle and displayed for an automatically drawn border such as the endocardial border over the full heart cycle. The spatial gradient of velocity used for determining the strain and the displacements of the borders form one frame to a successive one in a sequence of frames uses so called Doppler Tissue Imaging, so called DTI or TDI. This technique allows to measure tissue velocity over all points in the ventricular wall. The measurement of velocity itself provides a direct information about the wall motion and helps to uncover abnormalities not immediately observable from the visualization in B-mode. The velocity contains information about either rigid body displacement, shear, and contraction/distension, the latter being immediately related to the myocardial activity. Post processing of the DTI velocity data allows the evaluation of additional quantities, namely strain-rate and strain, that are strictly related to the regional function. Segmental strain gives a direct evaluation of the degree of contractility of the myocardium during systole, as well as of its relaxation during ventricular filling.

Nevertheless TDI suffers from a few drawbacks consisting in limitations of the technique. The evaluation of velocity, and to a greater degree when strain rate and strain are evaluated, requires a higher frame rate with respect to B-mode imaging because velocity is a more rapidly varying function than B-mode displacement. A Doppler signal requires additional processing with respect to the simple echo.

Doppler tissue imaging suffers further of an intrinsic limitation due to the fact that only the component of velocity along a scanline can be measured. This limitation has several drawbacks. When tissue moves in a direction that is not aligned with the scanline, the Doppler velocity does not reflect the effective tissue kinematics. Only the component of strain and strain rate along the scanline can be evaluated correctly, giving a reduced view of the local deformation state. This limits the application of DTI (or TDI) to the anatomic sites that can be imagined aligned along a scanline. In echocardiography this corresponds essentially to the interventricular septum and to the lateral walls in apical view.

Thus the angle dependency of the Tissue Doppler Imaging-based strain rate measurements is a strong limitation of the current techniques for determining strain rates. The above limitations of TDI-based strain rate measurements has the consequence that it is impossible to have direct measurements of short-axis mechanics of the left ventricle since in this case the velocity of the tissue has to be determined which direction is perpendicular or approximately perpendicular to the direction of propagation of the ultrasound beam so that no Doppler effect can be determined.

Thus there is the need for an angle independent ecographic imaging based strain and strain rate investigation method.

An object of the present invention is to provide for such a method of determining the time dependent behavior of non rigid moving objects, particularly of biological tissues from echographic ultrasound imaging data which is independent from the angle of propagation of the ultrasound beams and which method makes use of a method of tracking position and velocity of objects' borders in two or three dimensional digital images, particularly in echographic images, elaborating the said ultrasound imaging data in order to track the displacement of a border of a moving tissue or a moving object in a sequence of consecutive ultrasound image frames.

Another object of the present invention is to provide for a method of displaying the results of the dynamical behavior of the moving object, particularly of the moving tissue in combination of a two or three dimensional image of the object and of its surroundings. More specifically the moving object is the ventricular wall of the left ventricle and the dynamical behavior of the said ventricle wall is displayed overlaid or combined with the B-mode image of the said ventricle.

DISCLOSURE OF THE INVENTION

The present invention achieves the above mentioned aims with a method of determining the time dependent behavior of non rigid moving objects, particularly of biological tissues from echographic ultrasound imaging data comprising the steps of
tracking position and velocity of objects' borders in two or three dimensional digital images, particularly in echographic images comprising the following steps:

Acquiring a sequence of at least two consecutive ultrasound image frames of a moving tissue or a moving object which ultrasound image frames are timely separated by a certain time interval.
Automatically or manually defining a certain number of reference points of a border of a moving tissue or object at least on one image frame of the sequence of image frames acquired;
Automatically tracking the border of the moving tissue or object in the at least one further following frame by determining the new position of the reference points of the border in at least one following image frame of the sequence of image frames by estimating the position of the said reference points in the said at least following image frame of the sequence of image frames on the basis of the ultrasound image data of the acquired sequence of image frames;
Determining the border line instant velocity on each image frame of said sequence of image frames for at least a certain number of selected points or for all the points on the said border line as a function of the difference in position of the said points in the said at least following image frame of the sequence of image frames with respect to the position in the preceding image frame of the said sequence of image frames and of the time interval between the said preceding and the said following image frames;
determining the modulus of the components of the instant velocity vector at each one of the said selected points or at each point of the border line which components are a first tangential velocity vector component which is oriented in the tangential direction to the said border line at the corresponding point and a second radial or normal velocity vector component which is perpendicular to the said first tangential velocity vector component, and considering the said tangential and radial or normal velocity vector components as a measure for evaluating respectively strain or strain rate in the direction of the border line and strain or strain rate in a direction normal to the said border line.
Considering a border line having circular or annular shape even if irregular, the invention thus provides the step of determining the components of the instant velocity vector at each point or at certain points on the said border line which are tangentially and radially oriented with respect to the shape of the said border line which are a measure respectively for a strain in a circumferential direction of the border line and a strain in radial direction of the border line.

Applying this teaching to a sequence of images of the left ventricle taken along the short axis, then the tangential component of the velocity vector at the selected points on the border line chosen are a measure for a twisting motion of the ventricular wall, while the radial component of the velocity vector at the said selected points are a measure of a deformation of the ventricle wall in the sense of the constriction of the ventricle.

According to a preferred embodiment, the sequence of image frames acquired is a sequence of consecutive B-mode, grey scale ultrasound images.

Relating to the tracking phase, the method provides the following steps:

on a first frame a border line is drawn either manually or by means of an automatic border detection algorithm the border being defined by a trace of pixels of the image frame coinciding with the said border line;

The original trace of pixels coinciding with the manually or automatically drawn border line is followed in time, i.e. in the at least one following image frame by searching the maximum likelihood of the trace of pixels in the following image frame with the trace of pixels in the first or timely previous image frame of the sequence of image frames by analyzing the image pixels in the neighborhood of the said trace of pixels.

According to one preferred embodiment of the present invention the tracking of the border line is carried out by defining a certain number of reference points on the manually or automatically drawn border line on the first image frame and by using the method of the so called transmural cuts. The said method of transmural cuts is disclosed in greater detail in the document PCT/IT02/00114 filed on 27.02.2002.

More precisely transmural cuts consist in defining a line which crosses the border line drawn and passing through one reference point. A physiologically appropriate direction can be chosen, which typically can be the orthogonal direction to the border line at the reference point.

This operation is made for each image frame of the sequence of frames and for each reference point chosen.

The pixels taken along each transmural line in each of the image frames of the sequence of image frames are placed in columns, each column corresponding to one frame of the sequence of images. In this way the evolution along a transmural cut, can be represented for all instants at once in a two-dimensional space time representation.

The above disclosed procedure is a reduction of a two dimensional problem applied to a two dimensional image such as a B-mode ultrasound image to a one dimensional problem as a M-mode image.

The tracking of the border. i.e. of the trace of pixels is carried out along the space-time image using a cross-correlation procedure of the pixel column in the space-time image corresponding to a first image frame with the pixel column in the space-time image corresponding to a successive image frame of the sequence of image frames.

This technique can be applied to any kind of images in which the geometry of the border line drawn does not require any kind of special reference points to be tracked a priori such as pro example closed border lines as the border line of the cavity of a blood vessel in a cross-section image of the vessel.

When the object imaged has particular starting and ending points of a border which has a relevance as particular reference points in the motion executed by the border-line of the object, for example in the case of the walls of the endoventricular cavity, then a preventive cycle must be carried out for optimally tracking the border-line of the object along the sequence of image frames.

According to a further improvement of the above mentioned method when the object has few very representative points the general topology of the border line of the object imaged can be represented by tracking the motion of these few representative points prior to carry out the tracking of at least one or some of the reference points lying on the manually or automatically drawn border-line in each frame of the sequence of image frames.

These representative points can be for example the starting and ending points of the border line when this is an open one.

The representative reference points of the border of an imaged object can be also suggested by the physiology when the imaged object is a particular tissue or organ, such as for example the left ventricle.

Thus prior to carry out the tracking of some or all of the reference points chosen on the manually or automatically drawn border-line of the imaged object along the sequence of image frames the tracking of this few representative reference points is carried out.

The tracking of this few representative reference points is carried out in a identical way as the one disclosed above for the other reference points on the border-line drawn manually or automatically on the first frame by using the method of transmural cuts for constructing space-time images of each of the few representative reference points and determining the displacement of these points in each of the frames of the sequence of image frames by means of cross-correlation between each of the pixel columns with the successive pixel column corresponding to the pixels along the transmural cut across the same representative point in the different image frames of the sequence of image frames.

The direction of the transmural cuts can be chosen as the orthogonal direction to the border line at the corresponding reference point.

According to a further feature after having determined the displacement of the few representative reference points on the border-line of the imaged object in some or in all of the frames of the sequence of image frames, the position and the displacement of the other reference points on the border-lines at each image frame of the sequence of image frames are obtained by rescaling the originally drawn border-line in the first image frame in such a way to obtain in each image frame corresponding to a successive instant a topologically equivalent border line geometry with respect to the original border line. Typically this results in a translation of all points along the original border line.

This preliminary rescaling allows to keep the representative reference points always in the proper position in all frames of the sequence of image frames by rearranging the other reference points so that the representative reference points maintains the same meaning relatively to the object in all frames of the sequence of image frames.

Thus in a preferred embodiment the complete method according to the invention comprises the following steps:

> a) Acquiring a sequence of at least two consecutive ultrasound image frames of a moving tissue or a moving object which ultrasound image frames are timely separated by a certain time interval;
> b) Tracing a border line over one single first frame either manually or with the help of an automatic border drawing algorithm;
> c) Tracking the position displacements of one or more eventually present representative reference points over the entire sequence of consecutive image frames;
> d) Rescaling the border line drawn on the first image frame at least for some or for each of the following image frames of the sequence of image frames according to the corresponding position tracked of the representative reference points;
> e) Defining a certain number of further reference points distributed along the border line on the first image frame and falling on the said border line;
> f) Tracking the position of each point independently from the others along the sequence of image frames;
> g) Tracking of the position of the representative reference points and of the other reference points being carried out by
> h) for each point independently and in each of the image frames of the sequence of image frames defining a transmural cut line consisting in a line which crosses the border line drawn and passing through the said reference point;
> i) the pixels taken along each transmural cut line in each of the image frames of the sequence of image frames are placed in columns, each column corresponding to one frame of the sequence of images for representing the evolution along a transmural cut line, for all instants at once in a two-dimensional space time representation;
> j) the tracking of the border. i.e. of the trace of pixels along each transmural cut line is carried out along the space-time image using a cross-correlation procedure of the pixel column in the space-time image corresponding to a first image frame with the pixel column in the space-time image corresponding to a successive image frame of the sequence of image frames;

According to an improvement in both cases disclosed above when images are poor with a low signal-to-noise ratio the space-time representation along the transmural cuts can be built using a line for the transmural cut with a thickness larger than that of a single pixel and by extracting the average value across such a thickness.

The above mentioned method can be further developed for carrying out a surface border tracking three dimensional imaging.

The method according to the said development comprises the following steps:

> l) Acquiring a sequence of three-dimensional ultrasound imaging data sets, each three-dimensional data set being acquired with a predetermined time interval from the previous one;
> m) Defining at least a principal section plane of each three dimensional data set along one chosen direction for obtaining a sequence of two dimensional image frames along the said section plane;
> n) Drawing a border line of the object imaged either manually or automatically on the first two dimensional image frame of the sequence of two dimensional image frames taken along the said section plane;
> o) Carrying out the tracking steps c) to j) previously disclosed for the two dimensional sequence of image frames;
> p) For each three dimensional data set of the sequence of three dimensional datasets defining a preestablished number of further secondary section planes crossing the at least one, preferably all the principal section planes, the said secondary section planes being spaced apart one from the other along a predetermined direction and dividing the object represented by each three dimensional data set of the sequence of three-dimensional data sets in slices.
> q) For each secondary section plane in the sequence of three dimensional data sets constructing the corresponding sequence of image frames relative to the said secondary section plane;
> r) For each sequence of two dimensional image frames determining a guess border line in one single frame, by letting the border line passing across the intersection points with the principal section planes;
> s) Tracking the said guess border line by detecting a new border by applying the method steps according to c) to j) or e) to j) by substituting the time coordinate in the said disclosed steps with the spatial coordinate along the said guess border line by
> t) defining a certain number of transmural cuts on the single image of the sequence of images along the guess border line;
> u) identifying the pixels along the said transmural cuts and placing the pixels along each tansmural cuts side by side for constructing a two dimensional image where the horizontal axis indicates the spatial coordinate along the guess border line;
> v) carrying out the cross correlation between each of the consecutive pixel columns in the said two dimensional image and thus tracking the border line in one frame for each of the sequences of two dimensional image frames corresponding to each of the secondary section planes.

According to a further improvement one or more further principal section planes can be defined along each of which further section planes the methods steps 1) to o) are carried out.

In a preferred embodiment two orthogonal principal section planes are chosen for carrying out the above mentioned method steps, the crossing line of the two principal section planes defining a preferred direction of the said planes.

The said direction can be chosen as suggested by the topological or functional feature of the object imaged.

Considering ultrasound images of a biological tissue or of an organ such as for example the heart the said direction can be suggested by physiological reasons. For example this physiologically relevant direction can be chosen as the cut across a central vertical plane such as the ventricle axis.

In order to better define the share of secondary section planes cutting the principal section planes, the method according to the present invention comprises the steps of defining bounds or limits for a distance range within which the share of the said secondary section planes is defined.

Preferably a topological or physiological relevant direction is chosen, particularly the same direction defined for determining the principal section planes, along which direction bounds are determined for the ends of a distance range within which the share of secondary section planes at least transversal, particularly perpendicular to the said relevant direction is determined.

Still according to a further embodiment, when determining the first guess border line, this one is determined as a physiologically relevant line passing through the reliable points.

According to the present border tracking method the correct border is determined along a sequence of two dimensional or three dimensional ultrasound image data and the correct border for each image frame can be displayed overlaid on the displayed image frame as an highlighted line characterized by a color which is different from the grey-scale B-mode image displayed.

By means of the above tracking method of the border of two dimensional images or three dimensional images of an object it is also possible to determine the border line velocity and thus the border velocity of the object imaged.

Once that the displacement of the border line is known along the sequence of two dimensional or three dimensional ultrasound image data sets and the time interval between each two consecutive sets of image data are known the component(s) of velocity in the direction of the transmural cut(s) can be estimated for each reference point by means of a simple calculation.

The complete velocity vector is determined by evaluation of the other component(s) of velocity, the total number of components being two for two-dimensional imaging and being three for three-dimensional imaging.

Each missing component of velocity can be evaluated once again with the method of transmural cuts.

aa) For each reference point, on each image frame of the sequence of image frames, a transmural cut consisting in a line which crosses the tracked point and directed along the direction where the additional component of velocity must be evaluated, typically orthogonal to the direction previous employed for tracking the border.

bb) the pixels taken along each transmural cut line in each of the image frames of the sequence of image frames are placed in columns for all instants at once in a two-dimensional space time representation;

cc) the evaluation of the velocity component along the chosen direction is carried out along the space-time image using a cross-correlation procedure of the pixel column in the space-time image. The velocity being given by the ratio of the column-wise displacement of the correlation maximum and the time interval between the corresponding frames.

The method is identical of that employed for tracking the border with the difference that only the frame-by-frame displacement is required and the eventual time integration of said displacement to get the motion of the border is ignored.

A different evaluation of the velocity vector can be obtained by applying two dimensional-correlation techniques or a specific optical flow technique particularly developed for ultrasound image data of moving objects.

The said velocity estimation method can be carried out in combination with the above disclosed method for tracking the border of the imaged moving object.

The said method is an adaptation of known method so called OPTICAL FLOW methods, like a known method so called PIV method used in fluid dynamics.

More detailed description of the optical flow method can be found in document US 6,553,152 and Lucas BD, Kanade T. An Iterative Image Registration Technique with an Application to Stereo Vision, IJCAI81; 674-679 1981 and in Bouguet J-Y. Pyramidal Implementation of the Lucas Kanade Feature Tracker, TechReport as Part of Open Computer Vision Library Documentation, Intel Corporation.

For the PIV method detailed information can be found in Adrian RJ, Particle-Image technique for experimental fluid mechanics Annu. Rev. Fluid Mech. 1991, 23; 261; Melling A, Tracer particles and seeding for particle image velocimetry Meas. Sci. Technol. 1997, 8; 1406. Singh A. Optic Flow Computation: A unified Perspective. Piscataway, NJ; IEEE Comput. Soc. Press, 1992; Barrow JL, Fleet DJ, Beuchermin S. Performance of optical flow techniques, International Journal of Computer Vision 1994, 12;43-77; Hu H. Saga, T. Kobayashi, T.Taniguchi, N.Research on the vertical and turbulent structures in the lobed jet flow by using LIF and PIV. Meas.Sci. Technolo. 2000, 1; 698 and BrowneP, Ramuzat A, Saxena R, Yoganathan AP.

Thus in displaying the B-mode images the border tracked can be drawn as a line as disclosed above and the velocity vectors of the border taken at certain number of points of the said border line are displayed as arrows having a different color as the border line and the direction of the velocity vector and a length corresponding to the modulus of the velocity vector in the image plane of the two dimensional image displayed.

When displaying the B-mode images the border line tracked is displayed as a line and the instant velocity vectors also, the line and the vectors being drawn as color highlighted line on the grey scale B-mode image.

In this case the invention can provide alternative view in which only the tangential and only the radial component of the velocity vectors are shown or the said velocity vectors are shown. As an alternative one image can show superimposed or drawn on the grey scale B-mode image the border line, the velocity vector and one or both components oriented in the tangential direction and/or in the radial direction.

By means of the method according to the present invention a different approach for evaluating the dynamical behavior of moving objects, particularly of moving organs or tissues has been provided which is completely independent from the definition of an angle of view of the object.

The above effect is achieved by tracking borders of a moving object in two and three dimensional ultrasound imaging where the borders are not "detected", rather they are "tracked", i.e. followed in time, starting from one reliable existing instantaneous trace that is commonly -but not necessarily- manually drawn by the experienced operator over one single frame. Using this approach all the ambiguousness that are present in a pure detection approach are cleared, the original trace is followed in time by searching the maximum likelihood over its neighborhood in the following frames.

Any kind of tracking technique can be used as for example the so called PIV or the optical flow technique used in so called registering methods which are described in detail in the reference already cited above.

Nevertheless a preferred embodiment of the said tracking technique for each single point is approached using a method based on transmural cuts that is similar to that introduced in the document PCT/IT02/00114 filed on 27.02.2002. Afterward the velocity on the tracked borders are estimated on the basis of the same maximum likelihood between two consecutive frames.

The automatic tracking method disclosed here allows the tracking of a border on a sequence of two-dimensional or three-dimensional images, and the evaluation of the velocity vector field on such borders. In principle, the border could be tracked on the basis of the velocity vector only, however a tracking procedure is a result of the summation (time integration) of the estimated velocities and is prone to an error growth in presence of small incorrect estimates. This approach reduces the two- or three-dimensional tracking to a combination of one-dimensional tracking problems along the single topological relevant direction (typically the orthogonal to the border), that can be much better controlled and made accurate. On the opposite, the accurate tracking result is employed to improve the estimates of the velocity vector.

The result of this procedure is the automatic definition of the borders displacement and velocity over all frames of a sequence of images, starting from the border traced on a single image.

Eventually, the found borders information will be used to evaluated some geometric properties, like volume, area, or sizes, of the organ. The border kinematics (tracking + velocity) allows to estimate global quantities (like volumes, lengths) as well as local phenomena (like rotations, strain) in a unique approach.

The velocity vectors having absolute modulus and direction are obtained without any angular dependence from the direction of propagation of the ultrasound beams relatively to the imaged object. This allows to determine the components or projections of the said velocity vectors onto two direction which are perpendicular one to the other and one of which is oriented tangentially to the border line at the corresponding reference point. In this condition velocity information in the direction of the border line and thus of the tissue wall and in the direction normal to the said tissue wall can be determined at each reference point which velocity data are a measure of the strain or strain rate in the direction of the tissue wall and in a direction perpendicular to it.

Particularly in the case of short axis images of the left ventricle, the present invention allows to obtain velocity information along the circumferential direction of the annular shape of the ventricle wall as seen in the said short axis view and in the radial direction of the said annular shape of the ventricle wall in the said short axis view.

This allows to have information about the strain and the strain rate of the ventricle wall in the circumferential and in the radial direction. Circumferential strain and strain rate are measures of the twisting of the ventricle wall around the longitudinal axis, which is an axis going form the apex to the mitral valve. Radial strain and strain rate give information about the constriction or compression of the ventricle.

BRIEF DESCRIPTION OF THE DRAWINGS

Figure 1 illustrates diagrammatically the so called short axis views of three different regions of the heart denominated from the top to the bottom Basal, Mid-ventricular and Apical regions of the ventricles.

Figure 2 illustrates diagrammatically the slice image which is expected at the mid-ventricular region.

Figures 3A, 3B, 3C illustrate respectively an image of the heart with on it the arrows indicating the so called longitudinal strain which is oriented in the longitudinal or apical axis of the heart or ventricle, particularly of the left ventricle, the so called radial strain and the so called circumferential strain. In each image the strain is indicated by vectors oriented in the direction of the apical or longitudinal axis and in the direction of the short axis and tangentially to the annular wall border line in a short axis view.

Figure 4 illustrates at the upper half part a short axis B-mode image of the left ventricle and at the lower half the same short-axis B-mode image as on the upper half with superimposed on it the border line and the instant velocity vectors at certain reference points on the said borderline.

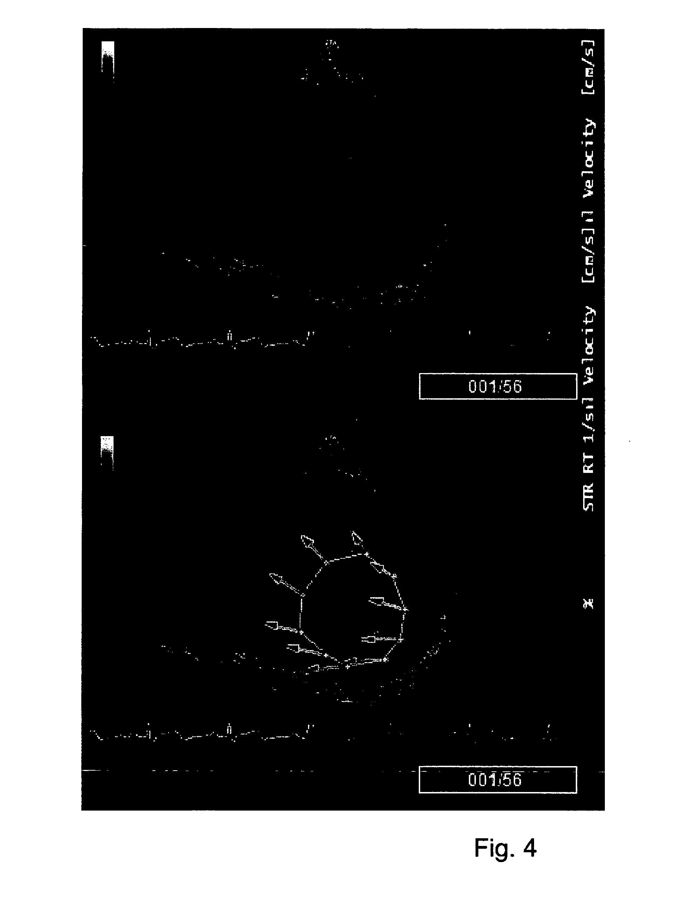

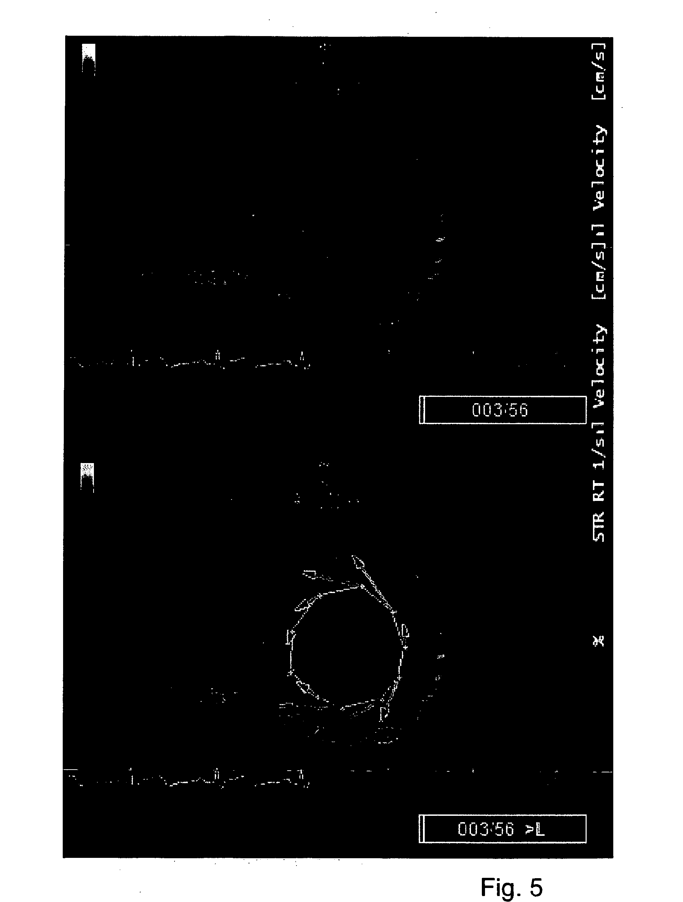

Figure 5 illustrates at the upper half part the same short-axis B-mode image of the left ventricle as in figure 4 and on the lower half the said B-mode image as on the upper half but with superimposed on it the border line with the reference points and for each reference point on the said border line the tangential component at the said points of the instant velocity vectors represented on figure 4 lower half image. For each reference point on the border line the tangential component is represented as an arrow oriented in the direction of the tangent to the border line at the corresponding reference point and the length of the arrow indicates the velocity in the said direction and at the corresponding reference point.

Figure 6 is a similar figure to figure 4 and 5 and the B-mode image illustrated in it and the border line and the reference points on it are the same one as in the figures 4 and 5. However in the lower half of figure 6 the radial component of the instant velocity vector at each of the reference points is illustrated and represented by an arrow which indicates the radial direction at each reference point and which length indicates the modulus of the said velocity component in the radial direction at each reference point of the border line.

Figure 7 illustrates an echographic image of the left ventricle, in long axis view (from the apex to the mitral plane), extracted from an echocardiographic recording (58 frames, 2 cycles) with an endocardial border (white) and the instant border velocity (white arrows).

Figure 8 illustrates an echographic image of the left ventricle, in short axis view (transversal section), extracted from an echocardiographic recording (49 frames, 2 cycles) with a "closed" endocardial border (white) and the instant border velocity (white arrows).

Figure 9 illustrates an echographic image of the left ventricle, in long axis view. The traced endocardial border implicitly defines the starting and final points and the mitral plane. The position of the transmural cuts, passing from the edge points and normal to the transmitral plane, are indicated.

Figure 10 illustrates a space-time representation, where space is along a transmural cut, of the echographic images sequence. The transmural cut is taken as for the starting point in figure 9. The time evolution of the starting point, tracked automatically, is reported.

Figure 11 illustrates an echographic image of the left ventricle, in long axis view, during diastole (left) and systole (right). The original endocardial border just rescaled on the based of the mitral plane displacement is shown. The instantaneous transmural cuts on each of the originally points are also drawn.

Figure 12 illustrates a schematic view of an example of cutting a three-dimensional dataset with two orthogonal planes, having one common direction, to get two two-dimensional images

Figure 13 illustrates a schematic view of an example of cutting a three-dimensional dataset with transversal planes that are orthogonal to the principal planes like those employed in figure 12.

Figure 14 illustrates slices on a three-dimensional echographic dataset of the left heart. The left ventricle border is known on the vertical image. The border at the intersection with the horizontal slices represent the starting points for tracking the border on the horizontal images.

Figure 15 illustrates an horizontal slice on a three-dimensional echographic dataset of the left heart. The starting points and a circular first guess border are indicated.

Figure 16 illustrates a further display screen in which the screen is dived into several areas. One are displays the B-mode image. Another area the B-mode image with the border line and the selected points and the arrows representing the instant velocity vectors at this points. The right screen areas displays the curves of the time dependent behavior of the instant velocity vector at each point, of the tangential and radial components of the instant velocity vector at each point and of the strain and strain rate at each point.

## DETAILED DESCRIPTION OF THE DRAWINGS AND OF THE METHOD

Two-dimensional imaging

The method steps according to the present invention are firstly described with reference to a two dimensional case. A sequence of two dimensional B-mode image frames is acquired. The frames are acquired at predetermined time interval one form the other.

Consider a sequence of two-dimensional (2D) images; mathematically, this is a three-dimensional (3D) information that is 2D in space and 1D in time.

Consider that the images contain one organ/object or part of it, that changes its position and shape in time, of which organ we want to determine the dynamical behavior during motion by trace the border kinematics at all instants.

A typical organ for which the above conditions are met is the heart. Echocardiographic investigations have a great importance. Strain rate and strain echocardiography is an emerging non invasive technique for assessing myocardial function. Regional myocardial strain rate and strain can detect inducible ischemia at earlier stages than visual estimation of wall motion or wall thickening parameters. Changes in systolic and diastolic strain rate and strain have the potential to discriminate between different myocardial viability states.

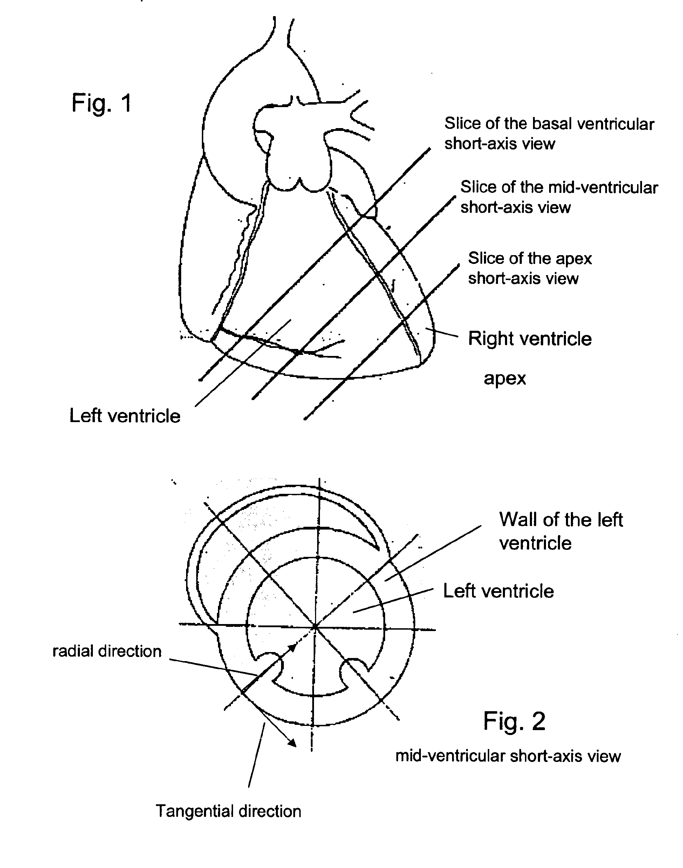

Figure 1 is a diagrammatic representation of the heart. Here the left ventricle and the right ventricle are indicated and also the apex of the left ventricle. The three lines indicates three section planes or slices along which so called short-axis views of the heart are taken. The images taken along a certain slice are of the so called B-mode echographic image type.

Figure 2 shows diagrammatically the image which should be seen along a short axis view slice corresponding to the central line in figure 1 and which corresponds to the so called mid-ventricular short axis view.

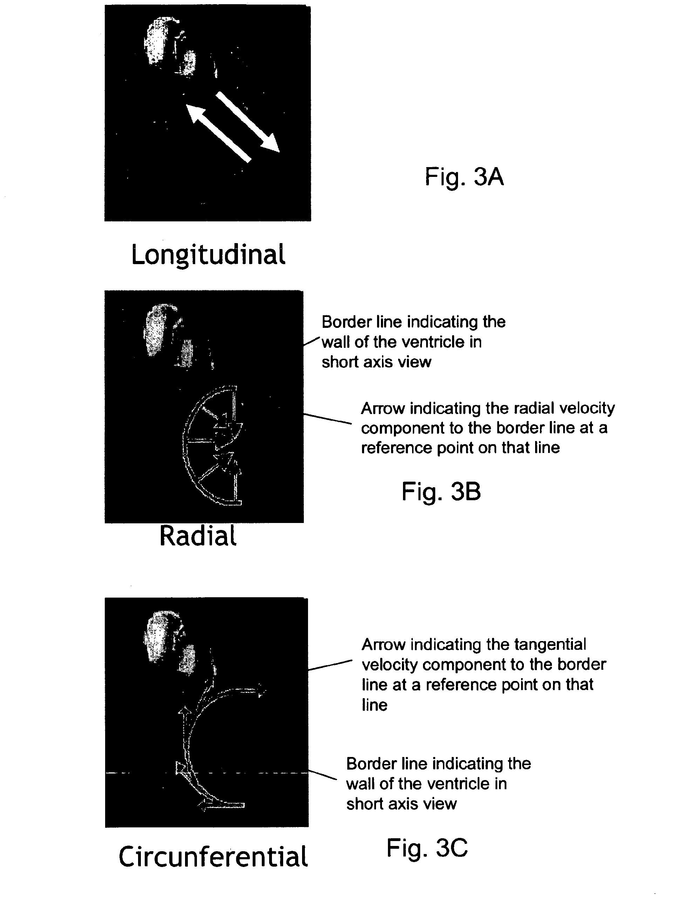

As a particular example considering the heart and the left ventricles as illustrated in figures 3A to 3C, basically three different kind of strain and strain rate is worth to be investigated for being meaningful for diagnostic purposes.

Longitudinal or apical strain and strain rate gives information about the longitudinal mechanics of the heart as a pump essentially at the Left ventricular annulus and at the Mid and Basal segments of the septum. The direction of the strain or strain rate vectors are indicated in figure 3A.

Figure 3B indicates the radial strain or strain rate and figure 3B the circumferential strain or strain rate vectors as important parameters giving information on the radial and circumferential mechanics of the left ventricle.

Relating to the example of echo cardiology, the Strain (St), is a measure of deformation and is defined as the instantaneous local border lengthening or shortening with respect to one arbitrary instant *t0*, when *L(t0) =L0*. Relating to the heart and more specifically to the ventricle the said instantaneous local border lengthening or shortening is commonly taken at the end of diastole (ECG R-wave) when the heart muscle is unstressed/unloaded

Strain may be thus defined as the following expression (Lagrangian formula):

$$St(t)=(L(t)-L0)/L0=\Delta L/L0$$

According to the above mathematical expression, lengthening is represented as a positive value for strain, while shortening is represented by a negative value. Being the initial instant *t0* taken at the end of diastole, Strain usually assumes negative values.

Strain Rate (SR) is defined as the modification rate of the Strain (St) over time (t) or, in other words, as the speed at which deformation occurs.

It can be derived from previous mathematical definition of strain as:

$$SR(t) = \Delta St/\Delta t.$$

The measurement unit of SR is [1/s] or [s-1]

The present invention is based on a new angle independent technique which allows to determine the velocity of every point on a line drawn to represent an imaged wall or border of a moving object and particularly of a moving organ such as the heart.

This technique provides for a border tracking to estimate tissue velocity at a collection of point in two-dimensional or three-dimensional sequence (loop) of B-Mode images.

The Myocardial borders are followed over the time starting from one reliable existing instantaneous trace or border line, either drawn by the physician over one single frame or determined by automatic border detection algorithm.

After myocardial border is manually traced by the operator, an analysis is performed on a pixel by pixel brightness basis allowing the compensation of movements of cardiac segments (translation, lengthening, thickening) and the evaluation of the punctual velocity.

The velocity is displayed as a vector overlaid onto the B-mode image where the length of the vector indicates the magnitude of the tissue velocity representation.

Figure 4 illustrates an example of such results in a short axis view of the left ventricle. In the upper half part of figure 4 a short axis B-mode image of the left ventricle is shown. In the lower half the same short-axis B-mode image as in the upper half is shown but on it there is superimposed the border line and the instant velocity vectors at certain reference points on the said borderline.

When a sequence of image frames is acquired the border line and/or at least the reference points on it are tracked over every frame of the sequence and the velocity vector at each reference point is determined and displayed as a function of the difference in position of the reference point in a preceding and in a following frame and of the time interval between the these frames. Thus the velocity vectors on the screen may vary with time if a sort of cinema view is carried out.

As already explained the velocity vectors determined as described above contain information about the dynamical behavior of the object, in this case the left ventricle wall. In order to be able to use this information for correlating mechanical behavior to physiological meaning so that only diagnostically relevant information is furnished to the specialized person, it is useful to isolate the information relatively to the tangential and to the radial strain and strain rates as explained and defined above.

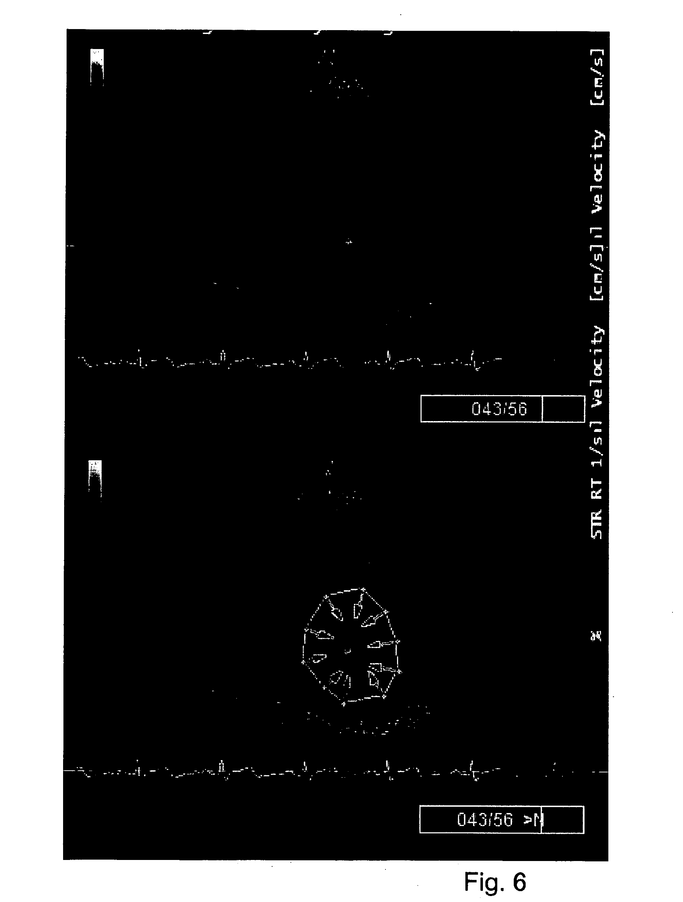

Figures 5 and 6 illustrates the results of the steps according to the present invention which provides for determining for each of the reference points on the border line the projection of the velocity vector determined at the said reference point onto the tangential direction and onto a direction which is normal to the tangential direction. With tangential direction it is meant the direction which is the one of the tangent line to the border line at the corresponding reference point. With the term radial direction it is meant the direction of a line which is normal to the said tangent line and which in a circle corresponds to the direction of the radius passing through the corresponding reference point.

The upper half part of figure 5 illustrates the same short-axis B-mode image of the left ventricle as in figure 4. The lower half the said B-mode image is the same B-mode image as in the upper half but on it there is superimposed the border line with the reference points and for each reference point on the said border line the tangential component at the said reference points of the instant velocity vectors represented on figure 4. For each reference point on the border line the tangential component is represented as an arrow oriented in the direction of the tangent to the border line at the corresponding reference point and the length of the arrow indicates the velocity in the said direction and at the corresponding reference point.

Similarly figure 6 shows in the upper half the B-mode image illustrated in figures 4 and 5 while in the lower half on these B-mode image there are also displayed the border line and the reference points on it while the arrows indicates the radial component of the instant velocity vector at each of the reference points. Each arrow indicates the radial direction at the corresponding reference point and the length of each arrow indicates the modulus of the said velocity component in the radial direction at each reference point of the border line.

Although the two velocity components i.e. the tangential and the radial component of the instant velocity vectors do not represent directly the strain and the strain rate, it is immediately clear to the skilled person that differences in the modulus of the tangential direction among the different reference points is a measure of the deformation of the border line and thus of the ventricle wall represented by the said border line. From the tangential and from the radial components of the velocity vectors at different points on the border line it is a straight mathematical way to determine the strain and the strain rate either in circumferential and in radial direction of the border line and thus of the ventricle wall in its short axis view.

Also the meaning of the circumferential and radial strain or strain rate becomes clear. In the case of the circumferential strain or strain rate, the measure of a twisting of the ventricle wall around a longitudinal or apical axis and of the change of this twisting in time is determined. The radial strain and strain rate is a measure of the compression of the ventricle wall in the sense od a constriction of the ventricle volume and of the change in this compression in time.

The method according to the present invention requires to determine the velocity vectors in an independent manner from the incidence angle of the echographic beam for generating the B-mode image of the moving object.

Although any kind of algorithm could be used which is able to determine a velocity vector field such as for example the so called optical flow tracking method or the so called PIV, the present invention provides a special tracking method which is particularly advantageous in combination with the above described method for determining the strain or strain rates of moving objects, particularly of the walls of the said objects and in the special case of echo cardiology.

The tracking method which is considered particularly advantageous according to the present invention comprises a first step which consist in tracing the border over one single frame by defining a border line.

A border is traced, manually or by another manual or automatic procedure, over one arbitrary frame. Such border is then defined as a sequence of N points, defined by their coordinate pairs $(x_i, y_i)$ with $i=1...N$ in the two dimensional image plane.

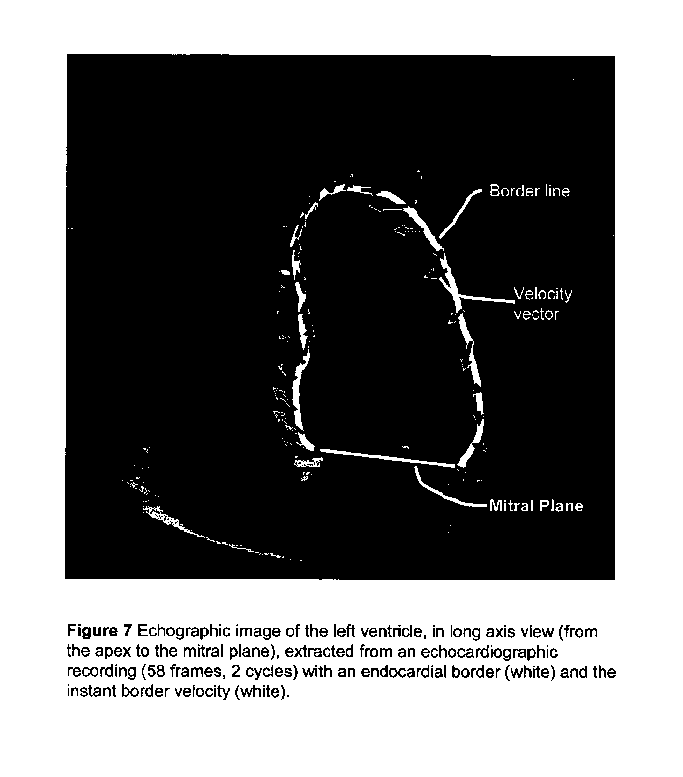

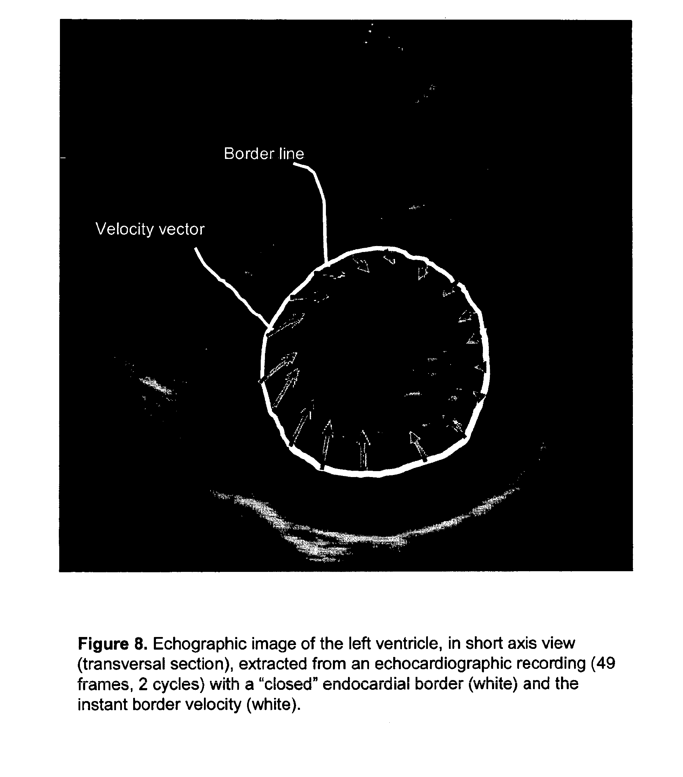

The result of this step is illustrated in figure 7 and 8. Figure 7 illustrates an image of the left ventricle where the endocardial border points are traced from one side of the mitral annulus to the other side of the same mitral annulus. Figure 8 illustrates an example in which the border is a closed one where the Nth point connects to the first one.

Referring now to a particular case like the one illustrated in figure 7, where the border has a staring and an ending point, the method according to the invention provides for a second step of tracking the most representative reference point of the border line drawn in the first image frame.

According to this step, the general topology of the object border is reproduced on all the images by tracking the motion of a few representative points. These are commonly the starting and final points of the border when this is an open one. In specific cases additional reference points can be added to improve the first evaluation of the region about which the border must be sought.

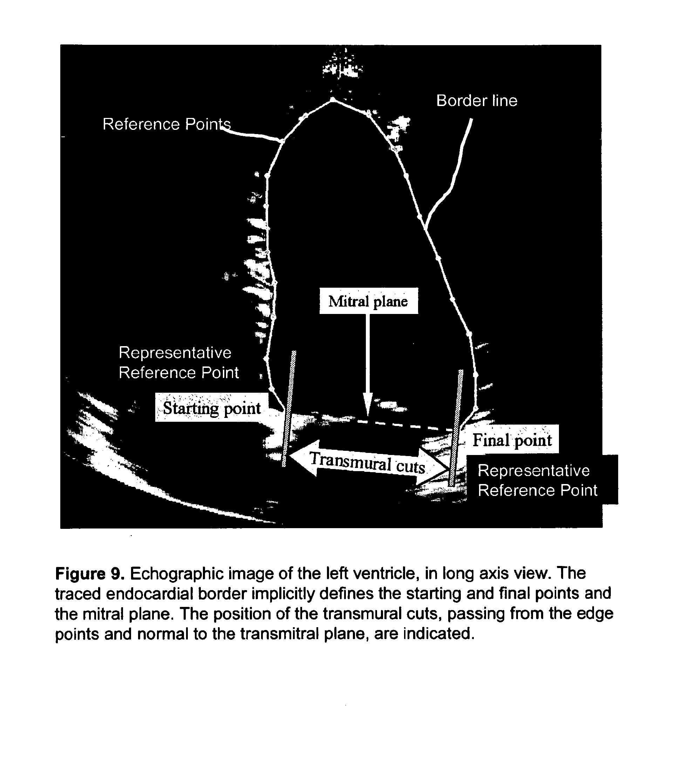

The displacement of the representative reference points along one or more specific directions is evaluated. Figure 9 shows the reference points for a left ventricle (in long axis view) that are the starting and final points of the originally traced border. In this case, the physiology suggests to track the motion of these points in the direction instantaneously orthogonal to the mitral plane (that is defined by these points).

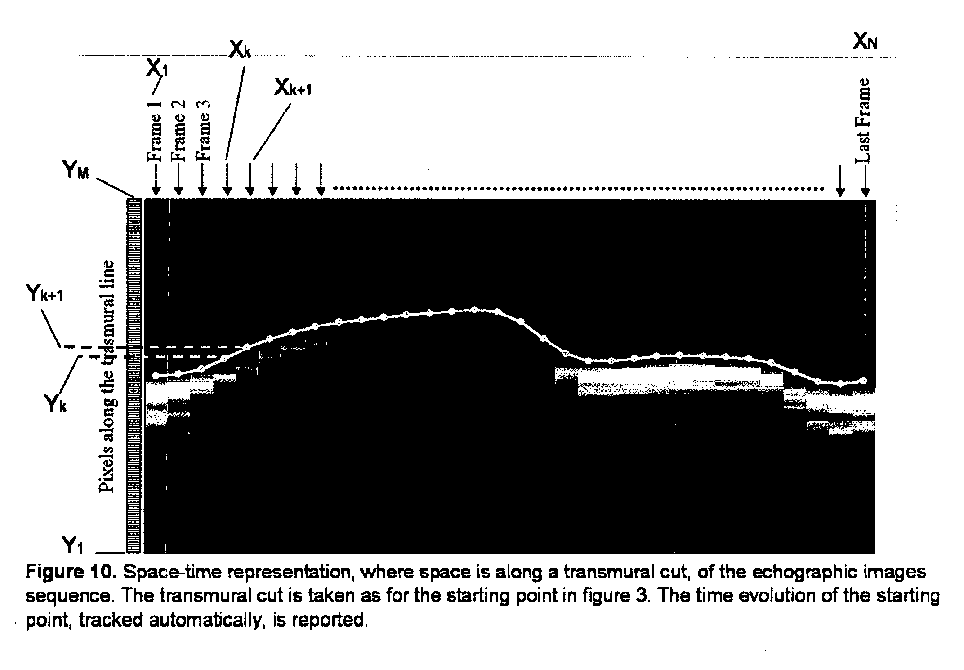

The tracking along a specified direction is performed by using the method of transmural cuts as follow. A line crossing the wall, passing through the point, and directed along the physiologically appropriate direction is drawn; in the case shown in figure 9 the appropriate direction is orthogonal to the mitral plane. In general two orthogonal direction can be employed. The pixels taken along the chosen direction line(s) are placed in columns, each column corresponding to one frame of the sequence of images. In this way the evolution along a line can be represented for all instants at once in a two dimensional space-time representation (sometime referred as M-mode representation) where one axis is the distance along the line and the other axis is the time. An example of such a representation is shown in figure 10.

In the case of poor images with a low signal to noise ratio the space time representation can be built using a line for the transmural cut with a thickness larger than that of a single pixel and extracting the average value across such a thickness.

The border tracking is then performed along the space-time image.

Tracking along the 2D space-time image

The tracking procedure is a procedure for following a border along one direction in a two-dimensional image like that in figure 4 starting from a known position at one instant.

Let us call x the horizontal direction and y the vertical direction, and indicate with $x_i$, i=1...N, where N is the number of columns in the image. The tracking is given by determination of a discrete sequence of real numbers $y_i=y(x_i)$, starting from a known point $y_k$ corresponding to the columns $x_k$.

This is a one dimensional tracking problem that can be solved with several possible standard methods. One method is reported here for giving completeness to the whole invention that can, however, employ also different techniques for this specific task when suggested by the specific imaging employed.

The displacement from the known point $y_k$ to the point $y_{k+1}$ can be estimated by evaluating the cross-correlation between the entire column at $x_k$ with the entire column at $x_{k+1}$. The cross-correlation function will present a maximum, the position of the maximum gives the value of the vertical displacement required to maximize the similarity between the two columns, therefore $y_{k+1}$ is estimated by adding such a displacement to $y_k$. This procedure is repeated between all pairs of nearby columns and the result is an estimate of the entire border $y_i$, i=1...N.

In this procedure it is convenient to employ windowing techniques that avoid side effects given by the two ends of the finite size columns. When applicable, it is also convenient to make use of the periodicity of the signal along x in order to perform the method in Fourier space.

The first estimate is improved by applying the same procedure recursively on increasingly reduced spatial width about the previously found border.

This first estimate $y_i$ can be further improved. To this aim a subset of the image is extracted by taking a few points above and below the first estimate $y_i$, and a new image whose center corresponds to the sequence $y_i$ is generated. A snake procedure like the one described in Blake A., Yuille A. Active Vision MIT press, 1992., is employed to follow, in the new image, the image brightness level that passes through the fixed point $y_k$. As a result the estimation of $y_i$, i=1...N is refined.

As it will become clear in the following description the tracking technique is a unique procedure that is common to different steps of the method according to the present invention.

As applied to the above mentioned step of the method according to the present invention, the result of this preliminary tracking procedure is the position and displacement, at all instants, of the most representative reference points along the predefined direction, or the vector combination when two directions are employed.

After this, all the other points of the original border are rescaled at each instant in order to get, at each instant a topologically equivalent border geometry. Typically, like in the example of figure 8, all the points are translated along the original curve.

This preliminary rescaling procedure permits to keep the reference points always at the proper position in all the frames, and to rearrange the other points so that the reference maintains the same meaning in all the frames.

The present step of tracking the most representative reference points such as the starting and ending point of a border line can be avoided when the specific geometry does not require or have any representative reference point to be tracked a priori. One example where this step can be avoided is given by the closed geometry in figure 8.

After having carried out the tracking of the most representative reference points, if these points are present or in place of the said tracking step the method according to the invention provides for a further step consisting in the tracking of all the other reference point on the border line drawn manually or automatically in the first step on a first two dimensional image frame of the sequence of image frames.

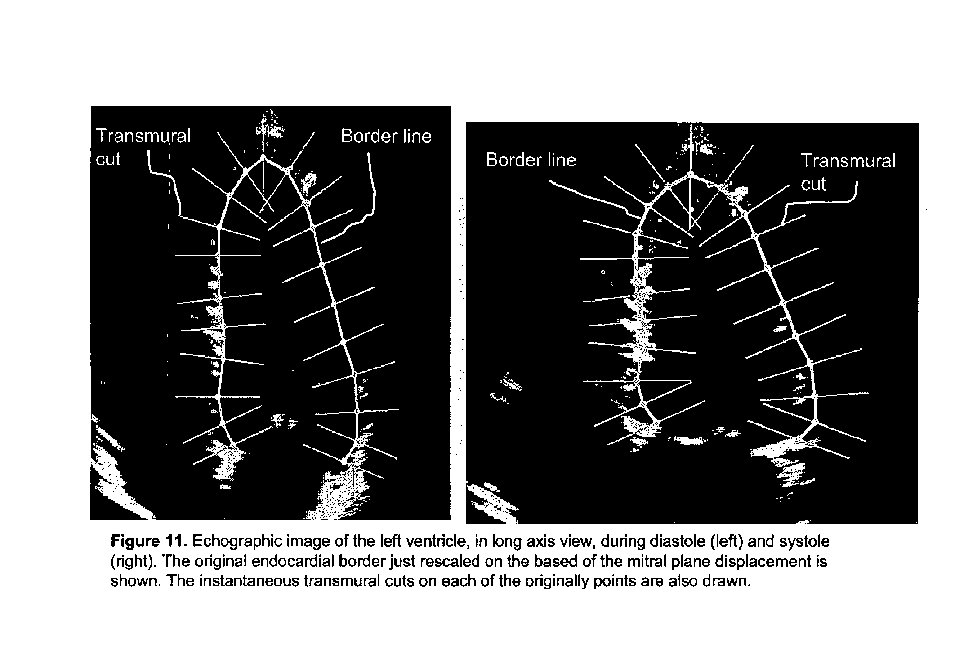

For each point, independently, the tracking along a specified direction is performed by using the method of transmural cuts as follow. A line crossing the wall, passing through the point, and directed along the physiologically appropriate direction is drawn, this operation is made for each instant/frame of the sequence of image frames because the points are not fixed in time but they have been previously rescaled at each instant accordingly with the instantaneous displacement of the reference points. In most cases, like in the case shown in figure 11, the appropriate direction is taken at each instant as orthogonal to the rescaled border. The pixels taken along each transmural line are placed in columns, each column corresponding to one frame of the sequence of images. In this way the evolution along a transmural cut, that is not fixed in all frames time but is slightly modified accordingly to the rescaling, can be represented for all instants at once in a two-dimensional space time representation analogous to that shown in figure 10.

In the case of poor images with a low signal-to-noise ratio the space time representation can be built using a line for the transmural cut with a thickness larger than that of a single pixel and extracting the average value across such a thickness.

The border tracking is then performed along the space-time image using the same technique employed in the step of tracking the representative reference points and disclosed above in a detailed manner.

The result of this step is the position, at all instants, of all the points along the predefined direction, or the vector combination when two directions are employed. At this stage all the original points have been tracked in time, each one independently, and we have a new border tracked over all frames.

It can be useful, especially in poor quality images, to improve the estimate by including a spatial coherence in the tracked border. This can be done by verifying the likelihood of the tracking between neighboring points and correcting the eventual discrepancies with appropriate filters or validation methods.

As an additional procedure the method according to the present invention can be provided in combination with a procedure for determining the instant border line velocity vector for each one of the reference pints defined on the border line as tracked on each two dimensional frame.

For each point, independently, the velocity vector can be known when two direction (three for three-dimensional imaging) are employed for displacing it. When a single direction is employed, the complete velocity vector can be evaluated by selecting additional direction for the transmural cuts on the already displaced point and evaluating the velocity along the additional direction.

In the case of poor images with a low signal-to-noise ratio the space time representation can be built using a line for the transmural cut with a thickness larger than that of a single pixel and extracting the average value across such a thickness.

Alternatively, the complete velocity vector can be evaluated by a two-dimensional correlation technique or a specific optical flow technique adapted to the particular case of ultrasound imaging B-mode data. The two-dimensional result can then be improved by imposing its accordance with the previous estimate obtained for one component from the transmural cut approach. Results of the entire procedure are shown, for one frame, in figure 7 and 8.

Three-dimensional imaging

As already disclosed above, the method according to the present invention has been described until now as referred to only a two dimensional imaging. It is clear to the skilled person that the same method can be extended to the three dimensional case. Here the geometrical definitions of tangent and radial or normal has the same meaning as in the two dimensional case only extended to the three-dimensional representation. The main problem is the one of extending the tracking of the borderline in the three-dimensional case. This is described in greater detail in the following.

The same steps described for the analysis of two-dimensional imaging can be employed for the border tracking in three-dimensional imaging. Such an extension is straightforward by using the previous steps in an appropriate combination, and substituting, in one case, the time direction with one spatial direction. Eventually no additional manual intervention is necessary with respect to what is done in two-dimensions, i.e. the indication of the border in one 2D frame.

A sequence of three-dimensional (3D) datasets is mathematically a four-dimensional (4D) information that is 3D in space and 1D in time. Consider that the images contain one organ/object or part of it, that changes its position and shape in time, of which organ it is desired to trace the border at all instants, the border now being a sequence of two-dimensional surfaces.

As a first step the method according to the present invention provides to choose one principal section plane which cuts to the three-dimensional dataset, and to apply the entire two-dimensional technique disclosed above on such plane.

The principal section plane of the 3D dataset is one plane, preferably along a physiologically relevant direction. Cutting the 3D datasets of the sequence of 3D datasets with this plane furnishes one sequence of 2D images.

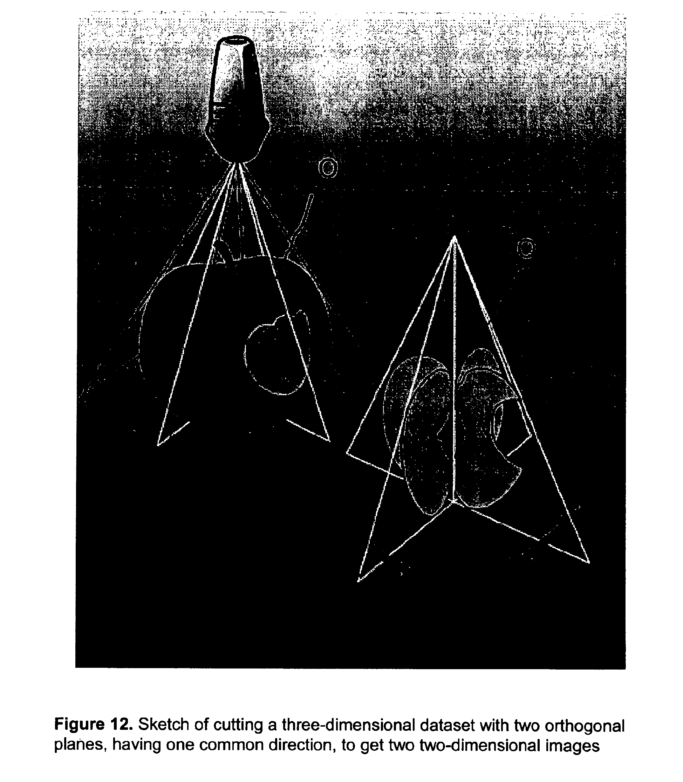

Figure 12 illustrates the cutting of a three-dimensional data set of ultrasound image data of the object 0 with two orthogonal principal section planes 1 and 2 oriented in the vertical direction.

For each principal section plane the entire tracking procedure as disclosed above for the sequence of two dimensional images is applied to this two-dimensional sequence of images taken on the principal section planes in order to track the border and evaluate the velocity on such principal section plane. This border is the signature of the sought border kinematics on the plane.

The above steps can be repeated with more than one or two principal section planes to improve the reliability of following steps in poor quality images.

After having carried out the above mentioned step a further step is carried out consisting in defining secondary section planes to the three-dimensional dataset, and applying the two-dimensional technique on single frames substituting the time direction with one spatial direction.

The previous step allows to define the bounds of the surface border. For this, one direction is chosen over the plane cut used in the previous step, preferably a physiologically relevant one (like the ventricle axis), and, for each instant, evaluate the upper and lower bounds along such direction of the border found in the previous step.

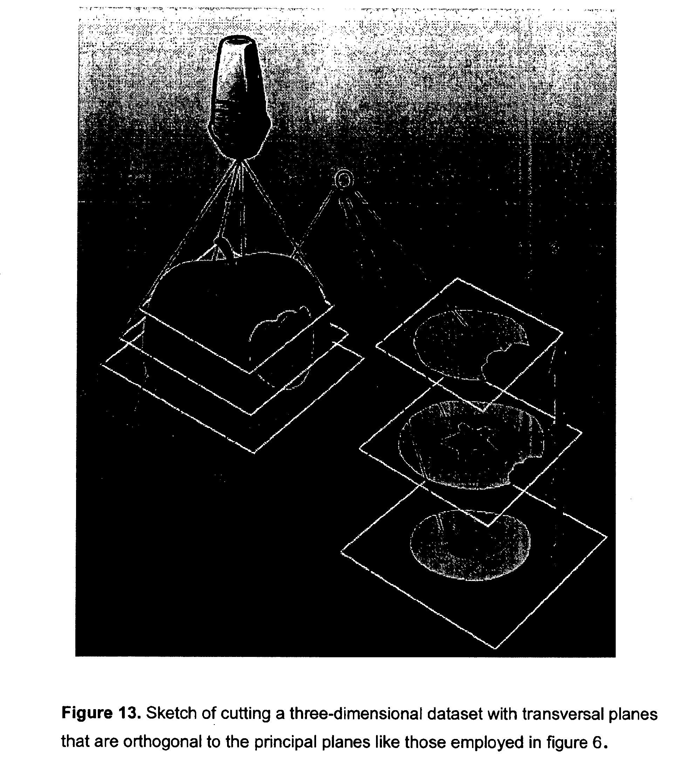

The range between these limits, at each instant, is further divided in M internal points, and the 3D dataset is cut in correspondence of such M points, with M secondary section planes that are orthogonal to the chosen direction as indicated with 3, 4 , 5 in figure 13. By means of the said secondary section planes the corresponding M sequences of 2D images are constructed.

Successively, for each sequence, a reliable border in one single frame is defined, commonly the same frame used when the borders are drawn manually during the previous step relative to the principal section planes.

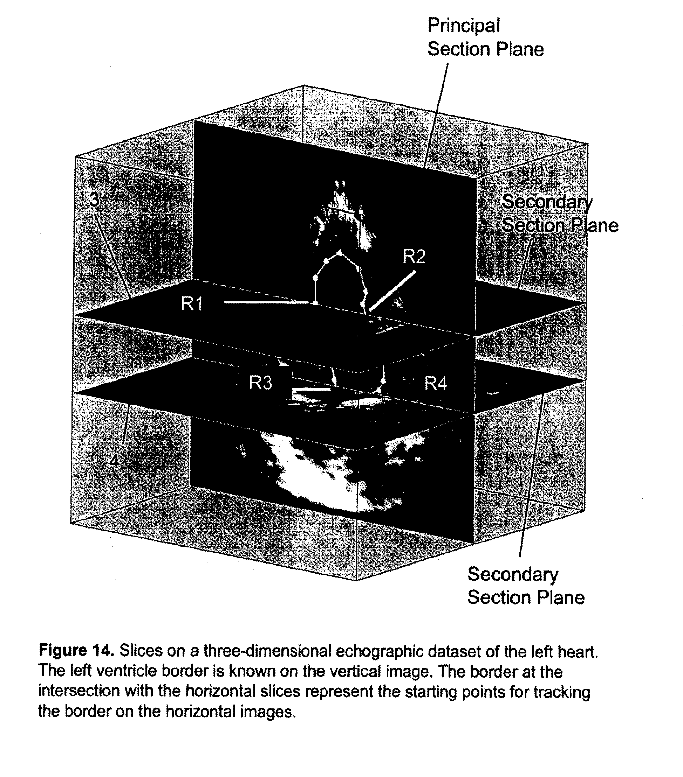

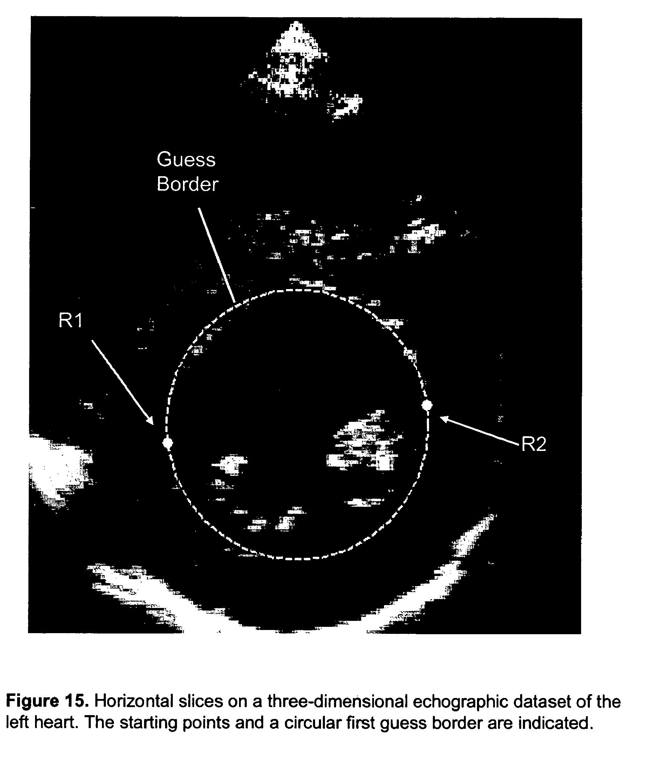

In each of such single M frames, the border now contains one or more reliable points, at the intersection with the principal section plane or planes 1, 2 and that come from the border(s) determined in the previous step relative to the principal section planes as illustrated in fig. 14 and indicated by R1, R2, R3, R4. A first guess border is constructed as a physiological relevant one passing through these reliable points R1, R2, R3, R4. An example of the said guess border on a secondary section plane is illustrated in the example of figure 15. Here the two dimensional image on a secondary section plane is illustrated together with the two reliable points R1 and R2. The guess border passing through the said two reliable points R1 and R2 is given by given by a circle in the transversal images of the left ventricle.

A new border is now detected by the same procedure used for a single transmural cut as disclosed in the previous chapter for the two dimensional case, this time however, substituting the time coordinate with the spatial coordinate along such first guess border as follows. Make a number of transmural cuts on the single image along the guess border, place the pixel found along each cut side by side in a new two-dimensional image and obtain a new image, like that in figure 4, where the horizontal axis does not indicate the time coordinate but the spatial coordinate along the tentative border. As a result the correct border is tracked in one frame for each of the M sequences.

The above mentioned procedure is applied on all the sequences obtained from the appropriate cutting of the three-dimensional dataset according to each secondary section plane defined. The tracking technique disclosed above in the previous chapter of the two dimensional ultrasound imaging is applied to each of the M sequences taking as a starting, reliable, border that found on one frame in the step relating to the secondary section planes. The resulting M borders will define the complete surface border.

Similarly to the two dimensional case discussed above also in the three-dimensional imaging case the instantaneous velocity vector for a certain number of predefined points on the border surface can be calculated by using the same technique disclosed of the two dimensional case. The two dimensional technique disclosed above is used here by substituting the two dimensional estimate with a three-dimensional estimate of velocity.

When the tracking procedure is insufficient to define the entire velocity vector, this is done by selecting additional direction for the transmural cuts on the already displaced point and evaluating the velocity along the additional direction.

Alternatively, this is done by using a three-dimensional correlation or optical flow technique, in place of the two-dimensional one for evaluating the three-dimensional velocity vector.

Once the velocity vector field is obtained by means of the above describe angle independent techniques, than the definition of the tangential and the normal or radial components of the said velocity vectors is a normal trigonometric projection carried out in a three dimensional space.

According to still another feature of the present invention for each image frame the corresponding B-mode image is displayed in a grey scale while the correct border line tracked is displayed overlaid on the corresponding displayed B-mode image of a corresponding image frame.

The said border line is in the form of an highlighted line characterized by a colour which is different from the grey-scale B-mode image displayed and on the border line the selected reference points tracked are displayed as highlighted dots with a colour which is different from the grey-scale B-mode image displayed, while the instant velocity vectors are displayed also superimposed in the grey scale B-mode image for each or part of the reference points, the direction of the arrow corresponding to the direction of the instant velocity vector and the lengths of the arrow being proportional to the modulus of the said instant velocity vector represented by the said arrow.

In combination or as an alternative to the arrows representing said instant velocity vectors, arrows displayed representing the tangential component and or arrows representing the radial or normal component of the said velocity vectors, the direction of the arrows being parallel to the tangential or radial direction of the said tangential or radial components of the velocity vector and the length of the arrows being proportional to the modulus of the said tangential or radial component of the velocity vector.

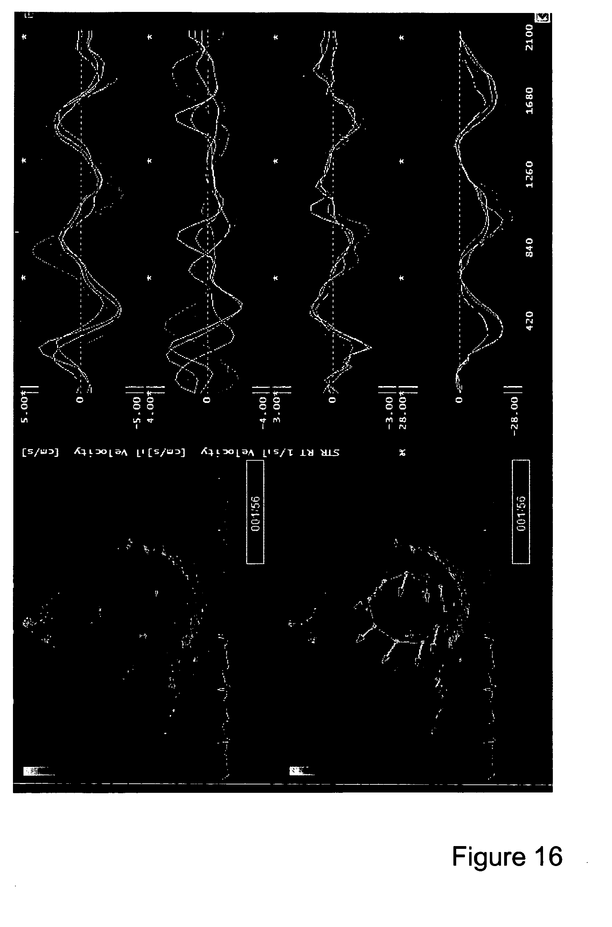

Furthermore as it appears from figure 16, for each one of a selected number of different points on the border line the time dependent modulus of the modulus of the tangential component, of the radial component, of the velocity vector (i.e. the component perpendicular to the tangential component of the velocity vector) is displaied in form of a curve over time. This are the two rught upper areas of the screen. The two left lower areas display the time dependent strain and strain rate in the form of a curve over time.

Further diagrams may represent similarly the tangential strain and/or the tangential strain rate, and/or the radial strain and/or the radial strain rate and/or the velocity vector modulus at each of the selected points.

Each selected point on the border line is displayed in a different colour univoquely associated to the said point, while the curve related to the time dependent velocity or strain or strain rate are displayed with the colour of the corresponding point in each of the above mentioned diagrams provided.

The said curves are displayed overlaid in the same diagram or coordinate system for each category of value represented, namely, velocity, velocity rate, strain, strain rate.

According to stuill another variant which can be provided alterbnatively or in combination with one or more of the preceding diagrams, the curves of the time dependency of the direct distance or of the distance along the border line between respectively to adiacent points of the selected points on the border line are displayed. This is done similarly to the above disclosed cases by highlighting each of the said curves with a different colour which is the colour of one of the two points which distance is represented by the said curve.

## Claims

**1.** Method of determining the time dependent behavior of non rigid moving objects, particularly of biological tissues from echographic ultrasound imaging data comprising the steps of

tracking position and velocity of objects' borders in two or three dimensional digital images, particularly in echographic images comprising the following steps:

Acquiring a sequence of at least two consecutive ultrasound image frames of a moving tissue or a moving object which ultrasound image frames are timely separated by a certain time interval;

Automatically or manually defining a certain number of reference points of a border of a moving tissue or object at least on a first image frame of the sequence of image frames acquired;

Automatically tracking the border of the moving tissue or object in the at least one further following frame by determining the new position of the reference points of the border in at least one following image frame of the sequence of image frames by estimating the position of the said reference points in the said at least following image frame of the sequence of image frames on the basis of the ultrasound image data of the acquired sequence of image frames;

Determining the border line instant velocity on each image frame of said sequence of image frames for at least a certain number of selected points or for all the points on the said border line as a function of the difference in position of the said points in the said at least following image frame of the sequence of image frames with respect to the position in the preceding image frame of the said sequence of image frames and of the time interval between the said preceding and the said following image frames;

determining the modulus of the components of the instant velocity vector at each one of the said selected points or at each point of the border line which components are a first tangential velocity vector component which is oriented in the tangential direction to the said border line at the corresponding point and a second radial or normal velocity vector component which is perpendicular to the said first tangential velocity vector component.

**2.** A method according to claim 1 **characterised in that** the tangential and radial or normal velocity vector components are taken as a measure for evaluating respectively strain or strain rate in the direction of the border line and strain or strain rate in a direction normal to the said border line.

**3.** A method according to claim 1, **characterised in that** the sequence of image frames acquired is a sequence of consecutive B-mode, grey scale ultrasound images.

**4.** A method according to claim 1, **characterised in that** on a first image frame a border line is drawn either manually or by means of an automatic border detection algorithm the border being defined by a trace of pixels of the image frame coinciding with the said border line;

the original trace of pixels coinciding with the manually or automatically drawn border line is followed in time, i.e. in the at least one following image frame by searching the maximum likelihood of the trace of pixels in the following image frame with the trace of pixels in the first or timely previous image frame of the sequence of image frames by analyzing the image pixels in the neighbourhood of the said trace of pixels.

**5.** A method according to claim 1, **characterised in that** the tracking of the border line is carried out by defining a certain number of reference points on the manually or automatically drawn border line on the first image frame and by tracking the position of the said reference points in the following image frames of the sequence of images.

**6.** A method according to claim 5, **characterised in that** the tracking of the border line is carried out by means of the so called optical flow method.

**7.** A method according to claim 5, **characterised in**

**that** the tracking of the border line is carried out by means of the so called PIV method.

**8.** A method according to claim 5, **characterised in that** the tracking of the border line is carried out by means of so called transmural cuts method;
the said transmural cuts method consists in defining for each reference point a line which crosses the border line drawn on a first image frame and each of which lines passing through one reference point;
each transmural cut line having a definite direction, which typically can be the orthogonal direction to the border line at the reference point;
carrying out the above mentioned step of defining transmural cuts for each image frame of the sequence of frames and for each reference point chosen;
the pixels taken along each transmural line in each of the image frames of the sequence of image frames being than placed in columns, each column corresponding to one frame of the sequence of images, forming a two-dimensional space-time representation of the evolution of the position of each reference point along the corresponding transmural cut;
the tracking of the border line i.e. of the trace of pixels, is carried out for each reference point defined on the said border line along the corresponding two-dimensional space-time image using a cross-correlation procedure of the pixel column in the space-time image corresponding to a first image frame with the pixel column in the space-time image corresponding to a successive image frame of the sequence of image frames.

**9.** A method according to claim 5, **characterised in that** it is applied to closed border lines.

**10.** A method according to claim 5 being provided in combination with objects imaged having at least one or more representative reference points in particular a starting and an ending point of a border which having a relevance as particular reference points in the motion executed by the border-line of the object and being
**characterised in that** prior of carrying out the tracking of all the reference points defined on the border line drawn on a first image frame of the sequence of at least two image frames a preventive tracking cycle of only the representative reference points is carried out.

**11.** A method according to claim 10, **characterised in that** the tracking of the representative reference points is carried out by using the method of transmural cuts for constructing space-time images of each of the representative reference points and determining the displacement of these points in each of the frames of the sequence of image frames by means of cross-correlation between each of the pixel columns with the successive pixel column corresponding to the pixels along the transmural cut across the same representative reference point in the different image frames of the sequence of image frames.

**12.** A method according to claim 11, **characterised in that** after having determined the displacement of the representative reference points on the border-line of the imaged object in some or in all of the frames of the sequence of image frames, the position and the displacement of the other reference points on the border-lines at each image frame of the sequence of image frames are obtained by rescaling the originally, manually or automatically drawn border-line in the first image frame in such a way to obtain in each image frame corresponding to a successive instant a topologically equivalent border line geometry with respect to the original border line and to keep the representative reference points always in the proper position in all frames of the sequence of image frames by rearranging the other reference points so that the representative reference points maintains the same meaning relatively to the object in all frames of the sequence of image frames.

**13.** A method according to claim 1 **characterised by** the following steps:

a) Acquiring a sequence of at least two consecutive ultrasound image frames of a moving tissue or a moving object which ultrasound image frames are timely separated by a certain time interval;
b) Tracing a border line over one single first frame either manually or with the help of an automatic border drawing algorithm;
c) Tracking the position displacements of one or more eventually present representative reference points over the entire sequence of consecutive image frames;
d) Rescaling the border line drawn on the first image frame at least for some or for each of the following image frames of the sequence of image frames according to the corresponding position tracked of the representative reference points;
e) Defining a certain number of further reference points distributed along the border line on the first image frame and falling on the said border line;
f) Tracking the position of each point independently from the others along the sequence of image frames;
g) Tracking of the position of the representative reference points and of the other reference points being carried out by

h) for each point independently and in each of the image frames of the sequence of image frames defining a transmural cut line consisting in a line which crosses the border line drawn and passing through the said reference point;

i) the pixels taken along each transmural cut line in each of the image frames of the sequence of image frames are placed in columns, each column corresponding to one frame of the sequence of images for representing the evolution along a transmural cut line, for all instants at once in a two-dimensional space time representation;

j) the tracking of the border. i.e. of the trace of pixels along each transmural cut line is carried out along the space-time image using a cross-correlation procedure of the pixel column in the space-time image corresponding to a first image frame with the pixel column in the space-time image corresponding to a successive image frame of the sequence of image frames.

**14.** A method according to claim 13 **characterised in that** in combination of images of poor quality, i.e. with a low signal-to noise-ratio, the space-time representation along the transmural cuts is built using a line for the transmural cut with a thickness larger than that of a single pixel and by extracting the average value across such a thickness.

**15.** A method according to claim 1 **characterised in that** it is applied for determining the time dependent behavior of non rigid moving objects, particularly of biological tissues from three-dimensional echographic ultrasound imaging data by carrying out a surface border tracking in three-dimensional imaging and comprising the following steps:

l) Acquiring a sequence of three-dimensional ultrasound imaging data sets, each three-dimensional data set being acquired with a predetermined time interval from the previous one;

m) Defining at least a principal section plane of each three dimensional data set along one chosen direction for obtaining a sequence of two dimensional image frames along the said section plane;

n) Drawing a border line of the object imaged either manually or automatically on the first two dimensional image frame of the sequence of two dimensional image frames taken along the said principal section plane or each of the said principal section planes;

o) Carrying out the tracking steps c) to j) previously disclosed for the each sequence of two-dimensional image frames for each corresponding principal section plane;

p) For each three-dimensional data set of the sequence of three-dimensional datasets defining a preestablished number of further secondary section planes crossing the at least one, preferably all the principal section planes, the said secondary section planes being spaced apart one from the other along a predetermined direction and dividing the object represented by each three-dimensional data set of the sequence of three-dimensional data sets in slices.

q) For each secondary section plane in the sequence of three dimensional data sets constructing the corresponding sequence of two-dimensional image frames relative to the said secondary section plane;

r) For each sequence of two-dimensional image frames relatively to each secondary section plane determining a guess border line in one single frame, by letting the guess border line passing across the intersection points of the corresponding secondary section plane with the border line drawn on the principal section plane or of the principal section planes;

s) Tracking the said guess border line by detecting a new border by applying the method steps according to c) to j) or e) to j) by substituting the time coordinate in the said disclosed steps with the spatial coordinate along the said guess border line by

t) defining a certain number of transmural cuts on the single image frame of the sequence of images frames corresponding to each secondary section plane along the guess border line;

u) identifying the pixels along the said transmural cuts and placing the pixels along each tansmural cuts side by side for constructing a two-dimensional image where the horizontal axis indicates the spatial coordinate along the guess border line;

v) carrying out the cross correlation between each of the consecutive pixel columns in the said two dimensional image and thus tracking the border line in one frame for each of the sequences of two-dimensional image frames corresponding to each of the secondary section planes.

**16.** A method according to claim 15, **characterised in that** one or more further principal section planes can be defined along each of which further section planes the methods steps 1) to o) are carried out.

**17.** A method according to claim 15, **characterised in that** two orthogonal principal section planes are chosen for carrying out the above mentioned method steps, the crossing line of the two principal section planes defining a preferred direction of the said planes.

**17.** A method according to claim 16, **characterised in that** in order to better define the group of secondary section planes cutting the principal section planes, the following steps are provided: defining bounds or limits for a distance range within which the group of the said secondary section planes has to be defined.

**18.** A method according to claim 17, **characterised in that** a direction along which the secondary section planes are distributed is chosen, which is the same direction defined for determining the principal section planes, along which direction bounds are determined for the ends of a distance range within which the group of secondary section planes are defined and which secondary section planes are at least transversal, particularly perpendicular to the said direction.

**19.** A method according to claim 1 or 15, **characterised in that** the correct border line tracked is displayed overlaid on the corresponding displayed B-mode image of a corresponding image frame, the said border line being in the form of an highlighted line **characterized by** a colour which is different from the grey-scale B-mode image displayed.

**20.** A method according to claim 19, **characterised in that** on the border line the selected reference points tracked are displayed as highlighted dots with a colour which is different from the grey-scale B-mode image displayed.

**21.** A method according to claim 1, **characterised in that** a first estimation of the instant velocity is determined for each reference point on the border line by dividing the displacement vector of each of the reference point from a first to a following image frames of the sequence of image frames by the time interval occurred between the said first and said following image frames.

**22.** A method according to claim 1, **characterised in that** the instant velocity of the border line on each of the image frames of the sequence of image frames is determined for each of the reference points on the border-line by applying the method of the so called transmural cuts along the additional direction required to evaluate the complete velocity vector.

**23.** A method according to claim 1, **characterized in that** the complete velocity vector is determined by evaluation of the component(s) of velocity along each direction, the total number of components being two for two-dimensional imaging and being three for three-dimensional imaging;
Each component of velocity vector being evaluated with the method of transmural cuts providing the following steps:

aa) For each reference point, on each image frame of the sequence of image frames, a transmural cut consisting in a line which crosses the tracked point and directed along the direction where the additional component of velocity is evaluated, typically orthogonal to the direction for the other components of the velocity vector.
bb) the pixels taken along each transmural cut line in each of the image frames of the sequence of image frames are placed in columns for all instants at once in a two-dimensional space time representation;
cc) the evaluation of the velocity component along the chosen direction is carried out along the space-time image using a cross-correlation procedure of the pixel column in the space-time image, the said velocity being given by the ratio of the column-wise displacement of the correlation maximum and the time interval between the corresponding frames.

**24.** The method according to claim 23, **characterized in that** it is identical of that employed for tracking the border except that only the frame-by-frame displacement is required and the eventual time integration of said displacement to get the motion of the border is ignored.

**25.** A method according claim 24, **characterised in that** in combination of images of poor quality, i.e. with a low signal-to noise-ratio, the space-time representation along the transmural cuts is built using a line for the transmural cut with a thickness larger than that of a single pixel and by extracting the average value across such a thickness.

**26.** A method according to claim 1, **characterised in that** the instant velocity of the border line on each of the image frames of the sequence of image frames is determined for each of the reference points on the border-line by applying two dimensional-correlation techniques or a specific optical flow technique adapted for ultrasound image data of moving objects.

**27.** A method according to claim 1, **characterised in that** for each image frame the corresponding B-mode image is displayed in a grey scale while the correct border line tracked is displayed overlaid on the corresponding displayed B-mode image of a corresponding image frame, the said border line being in the form of an highlighted line **characterized by** a colour which is different from the grey-scale B-mode image displayed and on the border line the selected reference points tracked are displayed as highlighted dots with a colour which is different from the grey-scale B-mode image displayed, while the instant velocity vectors are displayed also superimposed in the grey scale B-mode image for each or part of the reference points, the direction of the arrow corresponding to the direction of the instant velocity vector and the lengths of the arrow being proportional to the modulus of the said instant velocity vector represented by the said arrow.

**28.** A method according to claim 27, **characterised in that** in combination or as an alternative to the arrows representing said instant velocity vectors, arrows displayed representing the tangential component and or arrows representing the radial or normal component of the said velocity vectors, the direction of the arrows being parallel to the tangential or radial direction of the said tangential or radial components of the velocity vector and the length of the arrows being proportional to the modulus of the said tangential or radial component of the velocity vector.

**29.** A method according to claim 1, **characterised in that** for each one of a selected number of different points on the border line the time dependent modulus of the velocity vector or of the velocity rate at the corresponding point or the time dependent modulus of the tangential component or of the radial component, i.e. the component perpendicular to the tangential component of the velocity vector or of the velocity rate is displayed in form of a curve over time.

**30.** A method according to claim 29, **characterised in that** each selected point on the border line is displayed in a different colour univoquely associated to the said point, while the curve of time dependency of the modulus of the velocity vector or of the velocity rate at the corresponding point or the time dependent modulus of the tangential component or of the radial component, i.e. the component perpendicular to the tangential component of the velocity vector or of the velocity rate is displayed with the colour of the corresponding point.

**31.** A method according to claim 30, **characterised in that** the curves representing the time dependency of the modulus of the velocity vector or of the velocity rate or the time dependent modulus of the tangential component or of the radial component, i.e. the component perpendicular to the tangential component of the velocity vector or of the velocity rate for all points are displayed overlaid in the same diagram or coordinate system.

**32.** A method according to claim 29, or 30, or 31, **characterised in that** the diagram or diagrams displaying the time dependency of the modulus of the velocity vector or of the velocity rate or the time dependent modulus of the tangential component or of the radial component, i.e. the component perpendicular to the tangential component of the velocity vector or of the velocity rate for all points are displayed in a screen area placed next or at one side of a different screen area where the B-.mode image frames and the border line with the selected points and the arrows representing the said velocity vectors, or the said tangential component or the said radial component of the said velocity vectors are displayed.

**33.** A method according to claim 1 **characterised in that** for each one of a selected number of different points on the border line the time dependent strain or strain rate is displayed in the form of a curve over time.

**34.** A method according to claim 33, **characterised in that** each one of selected point on the border line is displayed in a different colour univoquely associated to the said point, while the curve of time dependency of the strain or strain rate is displayed with the colour of the corresponding point.

**35.** A method according to claim 34, **characterised in that** the curves representing the time dependency of the strain or of the strain rate for all points are displayed overlaid in the same diagram or coordinate system.

**36.** A method according to claim 33, or 34, or 35, **characterised in that** the diagram or diagrams displaying the time dependency of the strain or strain rate are displayed in a screen area placed next or at one side of a different screen area where the B-.mode image frames and the border line with the selected points and the arrows representing the said velocity vectors, or the said tangential component or the said radial component of the said velocity vectors are displayed.

**37.** A method according to claim 1, **characterised in that** for each one of a selected number of different points on the border line the time dependent strain or strain rate in tangential and/or in radial direction, i.e. in a direction perpendicular to the tangential direction is displayed in the form of a curve over time.

**38.** A method according to claim 37, **characterised in that** each selected point on the border line is displayed in a different colour univoquely associated to the said point, while the curve of time dependency of the strain in tangential and/or in radial direction, i.e. in a direction perpendicular to the tangential direction is displayed with the colour of the corresponding point.

**39.** A method according to claim 37, **characterised in that** the curves representing the time dependency of the strain in tangential and/or in radial direction, i.e. in a direction perpendicular to the tangential direction for all points are displayed overlaid in the same diagram or coordinate system.

**40.** A method according to claim 37, or 38, or 39, **characterised in that** the diagram or diagrams displaying the time dependency of the strain or strain rate in tangential and/or in radial direction, i.e. in a direction perpendicular to the tangential direction for all points are displayed in a screen area placed next or at one side of a different screen area where the B-.mode image frames and the border line with the selected points and the arrows representing the said velocity vectors, or the said tangential component or the said radial component of the said velocity vectors are displayed.

**41.** A method according to one or more of the claims 29 to 40, **characterised in that** the curves of the time dependency of the distance direct or along the border line between respectively to adjacent points of the selected points on the border line are displayed by highlighting each of the said curves with a different colour being the colour of one of the respectively two points which distance is represented by the said curve.

**Fig. 1**

Slice of the basal ventricular short-axis view

Slice of the mid-ventricular short-axis view

Slice of the apex short-axis view

Right ventricle

apex

Left ventricle

Wall of the left ventricle

Left ventricle

radial direction

**Fig. 2**

mid-ventricular short-axis view

Tangential direction

Fig. 3A

Longitudinal

Border line indicating the wall of the ventricle in short axis view

Arrow indicating the radial velocity component to the border line at a reference point on that line

Fig. 3B

Radial

Arrow indicating the tangential velocity component to the border line at a reference point on that line

Border line indicating the wall of the ventricle in short axis view

Circunferential    Fig. 3C

Fig. 4

Fig. 5

Fig. 6

**Figure 7** Echographic image of the left ventricle, in long axis view (from the apex to the mitral plane), extracted from an echocardiographic recording (58 frames, 2 cycles) with an endocardial border (white) and the instant border velocity (white).

**Figure 8.** Echographic image of the left ventricle, in short axis view (transversal section), extracted from an echocardiographic recording (49 frames, 2 cycles) with a "closed" endocardial border (white) and the instant border velocity (white).

**Figure 9.** Echographic image of the left ventricle, in long axis view. The traced endocardial border implicitly defines the starting and final points and the mitral plane. The position of the transmural cuts, passing from the edge points and normal to the transmitral plane, are indicated.

**Figure 10.** Space-time representation, where space is along a transmural cut, of the echographic images sequence. The transmural cut is taken as for the starting point in figure 3. The time evolution of the starting point, tracked automatically, is reported.

EP 1 876 567 A1

**Figure 11.** Echographic image of the left ventricle, in long axis view, during diastole (left) and systole (right). The original endocardial border just rescaled on the based of the mitral plane displacement is shown. The instantaneous transmural cuts on each of the originally points are also drawn.

**Figure 12.** Sketch of cutting a three-dimensional dataset with two orthogonal planes, having one common direction, to get two two-dimensional images

**Figure 13.** Sketch of cutting a three-dimensional dataset with transversal planes that are orthogonal to the principal planes like those employed in figure 6.

**Figure 14.** Slices on a three-dimensional echographic dataset of the left heart. The left ventricle border is known on the vertical image. The border at the intersection with the horizontal slices represent the starting points for tracking the border on the horizontal images.

**Figure 15.** Horizontal slices on a three-dimensional echographic dataset of the left heart. The starting points and a circular first guess border are indicated.

Figure 16

**European Patent Office**

## EUROPEAN SEARCH REPORT

Application Number

EP 06 42 5462

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VANNAN ET AL.: "Effect of Cardiac Resynchronisation Therapy on Longitudinal and Circumferential Left Ventricular Mechanics by Velocity Vector Imaging: Description and Initial Clinical Application of a Novel Method Using High-Frame-Rate B-Mode Echocardiographic Images" ECHOCARDIOGRAPHY, vol. 22, no. 10, November 2005 (2005-11), pages 826-830, XP002410937 | 1-3,5, 21,28 | INV. G06T7/20 |
| Y | * abstract * <br><br> * page 827, left-hand column * <br> * figures 2,3,5,6 * <br> ----- | 4,6-20, 22-27, 29-41 | |
| Y | COOK A.: "Ultrasound Delivers New Insight into the Heart" MEDICAL SOLUTIONS, [Online] June 2006 (2006-06), pages 68-71, XP002410938 Retrieved from the Internet: URL:http://healthcare.siemens.com/magazine /documents/2006_04/p68-71_care_vvi_june_06 _eng.pdf> [retrieved on 2006-12-08] * sections "Clinical Benefits", "Visualizing and Quantifying Synchrony" and "VVI: How it Works, and Where to Apply" * * figures on pages 69 and 70 * ----- | 29-41 | |
| | | | **TECHNICAL FIELDS SEARCHED (IPC)** |
| | | | G06T |
| Y | EP 1 522 875 A (ESAOTE SPA [IT]; AMID S R L [IT]) 13 April 2005 (2005-04-13) * abstract * * paragraph [0015] - paragraph [0047] * * figures 1-9 * ----- | 4,6-20, 22-27 | |
| | | | |
| | -/-- | | |

The present search report has been drawn up for all claims

| Place of search | Date of completion of the search | Examiner |
|---|---|---|
| Munich | 8 December 2006 | Engels, Angela |

EPO FORM 1503 03.82 (P04C01)

European Patent
Office

**EUROPEAN SEARCH REPORT**

Application Number

EP 06 42 5462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/143189 A1 (LYSYANSKY PETER [IL] ET AL) 22 July 2004 (2004-07-22) | 1-5,9, 19-21, 26,29-41 | |
| A | * abstract *<br><br>* paragraph [0033] - paragraph [0039] *<br>* paragraph [0051] *<br>* paragraph [0056] - paragraph [0059] *<br>* figures 8-11 *<br>----- | 6-8, 10-18, 22-25, 27,28 | |

TECHNICAL FIELDS
SEARCHED      (IPC)

The present search report has been drawn up for all claims

| Place of search | Date of completion of the search | Examiner |
|---|---|---|
| Munich | 8 December 2006 | Engels, Angela |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

               

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 06 42 5462

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2006

| Patent document cited in search report | | Publication date | Patent family member(s) | | Publication date |
|---|---|---|---|---|---|
| EP 1522875 | A | 13-04-2005 | US | 2005074153 A1 | 07-04-2005 |
| US 2004143189 | A1 | 22-07-2004 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0245587 A
- IT 0200114 W

- US 6553152 B

**Non-patent literature cited in the description**

- **LUCAS BD ; KANADE T.** An Iterative Image Registration Technique with an Application to Stereo Vision. *IJCAI81,* 1981, 674-679
- Pyramidal Implementation of the Lucas Kanade Feature Tracker. **BOUGUET J-Y.** TechReport as Part of Open Computer Vision Library Documentation. Intel Corporation
- **ADRIAN RJ.** Particle-Image technique for experimental fluid mechanics. *Annu. Rev. Fluid Mech.,* 1991, vol. 23, 261
- **MELLING A.** Tracer particles and seeding for particle image velocimetry. *Meas. Sci. Technol.,* 1997, vol. 8, 1406

- **SINGH A.** Optic Flow Computation: A unified Perspective. IEEE Comput. Soc. Press, 1992
- **BARROW JL ; FLEET DJ ; BEUCHERMIN S.** Performance of optical flow techniques. *International Journal of Computer Vision,* 1994, vol. 12, 43-77
- **HU H ; SAGA, T ; KOBAYASHI, T ; TANIGUCHI, N.** Research on the vertical and turbulent structures in the lobed jet flow by using LIF and PIV. *Meas.Sci. Technolo.,* 2000, vol. 1, 698
- **BLAKE A. ; YUILLE A.** Active Vision. MIT press, 1992